# EUROPEAN PATENT APPLICATION

(11) **EP 2 407 382 A2**
(43) Date of publication of application: **18.01.2012**
(21) Application number: 11168905.5
(22) Date of filing: 07.06.2011
(51) Int. Cl.: B64F 1/36

(54) **Device for actuation on the ground of aerodynamic turbines for actuating service circuits of aircraft, particularly circuits for cooling electronic devices**

(30) Priority: 16.07.2010 IT MI20100247 U
(71) Applicant: FIMAC S.p.A., 20030 Senago (MI) (IT)
(72) Inventor: Allari, Alberto, 22070 FENEGRO' CO (IT); De Santis, Pompeo, 20149 MILANO (IT)
(74) Representative: Modiano, Micaela Nadia

(57) **Abstract**

Device for actuation on the ground of aerodynamic turbines for actuating service circuits of aircrafts, particularly circuits for cooling electronic devices, comprising a supporting frame (2), a pneumatic pump (3) provided with an outlet port (4) and with an inlet port (5), and at least one connection conduit (6, 7) that can be associated, with one end thereof, with the outlet port (4) and, with the other end thereof, with an air intake (8), provided on the aircraft, of an aerodynamic turbine for actuating service circuits of aircrafts or which can be associated, with one end thereof, with the inlet port (5) and, with the other end thereof, with the exhaust port (9), provided on the aircraft, of an aerodynamic turbine for actuating service circuits of aircrafts in order to generate an air flow that actuates the aerodynamic turbine which, in turn, actuates the service circuit.

## Description

The present invention relates to a device for actuation on the ground of aerodynamic turbines for actuating service circuits of aircrafts, particularly circuits for cooling electronic devices.

As is known, on modem aircrafts there are numerous high-performance electronic devices with high energy density which need an effective dissipation of the heat generated thereby.

Such electronic devices are variously cooled by using systems that work by executing a vapor refrigeration cycle by means of which heat is taken away from the devices, thus ensuring a favourable environment for their operation.

Very often, the mechanical and/or electrical power required for the execution of the vapor refrigeration cycle is not available on board the aircraft and the cooling system uses the power of the air flow caused by the advancement of the aircraft which, for this purpose, is provided with a special air intake which powers an aerodynamic turbine which, in turn, actuates the compressor that compresses the refrigerant fluid in the circuit that actuates the vapor refrigeration cycle.

In the maintenance and checking of an aircraft there are operations, such as for example pre-flight checks or checks to identify possible malfunctions, for which it is necessary to make the electronic devices function when the aircraft is on the ground, i.e. when the air flow generated by the advancement of the aircraft is not available.

In such situations, if the operation requires the devices to function for just a few minutes, then the thermal inertia of the devices themselves is used during their operation. This technique suffers the drawback of being available for use only for operations that require a very limited timespan.

If however the operation requires longer timespans and therefore it is not possible to rely on the thermal inertia of the devices, fresh refrigerant fluid is injected into the refrigerating circuit and is then collected at the point of discharge in a special unit that executes a thermodynamic work cycle. This technique suffers the drawback of requiring a complex apparatus and of exposing the cooling system to the danger of contamination, which is not permissible for safety reasons and also because it compromises the reliability of the aircraft.

The aim of the present invention is to overcome the above mentioned drawbacks, by providing a device that makes possible the actuation on the ground of aerodynamic turbines for actuating service circuits of aircraft, particularly circuits for cooling electronic devices, while observing the integrity of the service circuit in such a way as to safely prevent the danger of contamination of the circuit.

Within this aim, an object of the invention is to provide a device that makes it possible to make the service circuit function practically with no time limit.

Another object of the invention is to provide a device that substantially reproduces, on the ground, the same actuation conditions of the service circuit during flight so as to also permit a check of the efficiency of the actuation turbine.

A further object of the invention is to provide a device that is structurally simple and which can be made with easily available commercial components.

Another object of the invention is to provide a device that is simple and practical to use.

This aim and these and other objects which will become better apparent hereinafter, are achieved by a device for actuation on the ground of aerodynamic turbines for actuating service circuits of aircrafts, particularly circuits for cooling electronic devices, characterized in that it comprises:
- a supporting frame;
- a pneumatic pump having an outlet port and an inlet port;
- at least one connection conduit that can be associated with one end thereof with said outlet port and with the other end thereof with an air intake, provided on the aircraft, of an aerodynamic turbine for actuating service circuits of aircrafts or which can be associated with one end thereof with said inlet port and with the other end thereof with the exhaust port, provided on the aircraft, of an aerodynamic turbine for actuating service circuits of aircrafts in order to generate an air flow for actuating said aerodynamic turbine.

Further characteristics and advantages of the present invention will become better apparent from the detailed description of the device according to the invention, illustrated by way of non-limiting example in the accompanying drawings wherein:

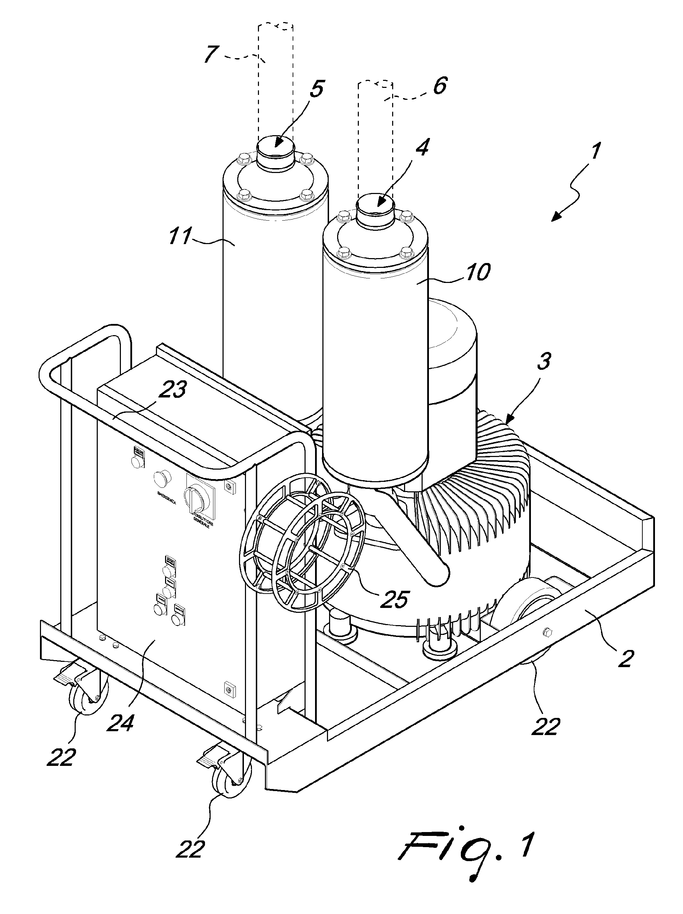

Figure 1 is a perspective view of the device according to the invention;

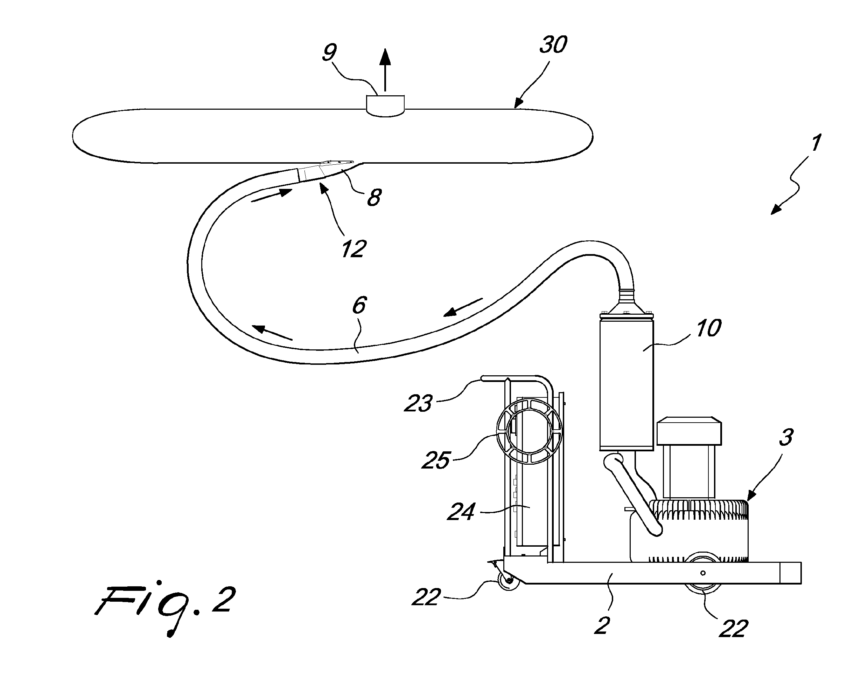

Figure 2 is a side elevation view of the device according to the invention, in a first mode of use;
Figure 3 is an exploded perspective view of an adapter, which can be coupled with the air intake of an aircraft, and the air intake proper;
Figure 4 is a view of the elements of Figure 3, assembled;
Figure 5 is an axial sectional view of the adapter of Figures 3 and 4 connected to the air intake of an aircraft;

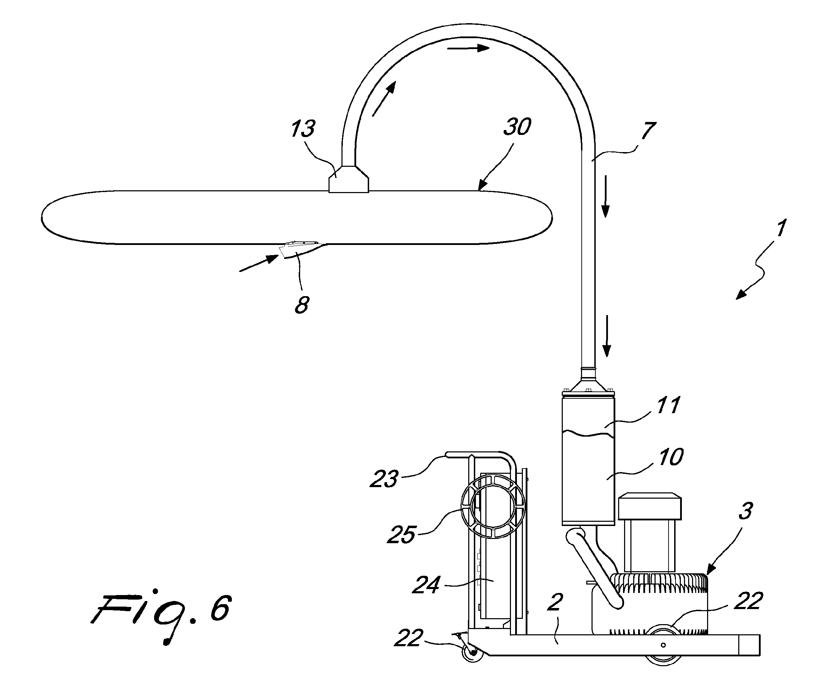

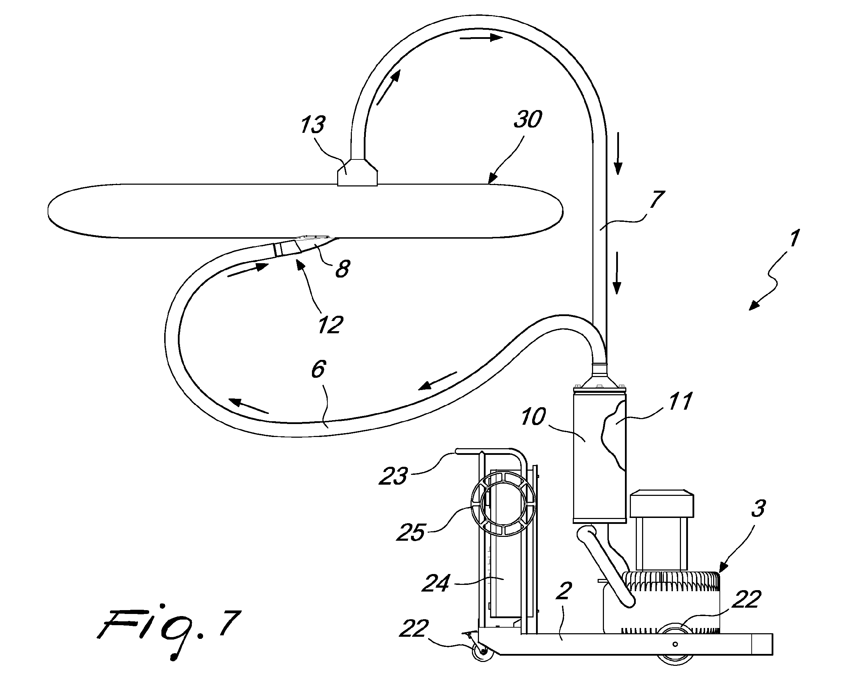

Figures 6 and 7 are side elevation views of the device according to the invention, in two more modes of use.

With reference to the figures, the device according to the invention, generally designated with the reference numeral 1, comprises a supporting frame 2 on which a pneumatic pump 3 is arranged, which is provided with an outlet port 4 and with an inlet port 5.

The device according to the invention further comprises at least one connection conduit 6, 7 that can be associated, with one end thereof, with the outlet port 4 and, with the other end thereof, with an air intake 8, provided on the aircraft, of an aerodynamic turbine for actuating service circuits of aircrafts, of known type and not shown for the sake of simplicity, or which can be associated, with one end thereof, with the inlet port 5 and, with the other end thereof, with an exhaust port 9, provided on the aircraft, of the aerodynamic turbine for actuating service circuits of aircrafts in order to generate an air flow that causes the actuation of the above mentioned turbine and thus the actuation of the service circuit or circuits of aircrafts which are actuated by this turbine.

Preferably, the device according to the invention is provided with two connection conduits, respectively: a first connection conduit 6 that can be associated, with one end thereof, with the outlet port 4 and, with the other end thereof, with the air intake 8, provided on the aircraft, of the aerodynamic turbine for actuating service circuits of aircrafts and a second connection conduit 7 that can be associated, with one end thereof, with the inlet port 5, and with the other end thereof, with the exhaust port 9, provided on the aircraft, of the aerodynamic turbine for actuating service circuits of aircrafts.

These two connection conduits 6, 7 can be used alternately with each other or in combination, as will become better apparent hereinafter.

In the example shown, the air intake 8 and the exhaust port 9 are arranged in a pod 30 of the aircraft, but they could have another arrangement or shape, according to requirements.

Preferably, the pneumatic pump 3 is constituted by a blower/extractor of the type with lateral channels.

Conveniently, on the outlet port 4 and/or on the inlet port 5 of the pneumatic pump 3 a filter 10, 11 is provided.

Advantageously, the end of the connection conduit 6, 7 is provided with an adapter 12, 13 which can be coupled with the air intake 8 or with the exhaust port 9, both provided on the aircraft, of the turbine for actuating service circuits of the aircraft.

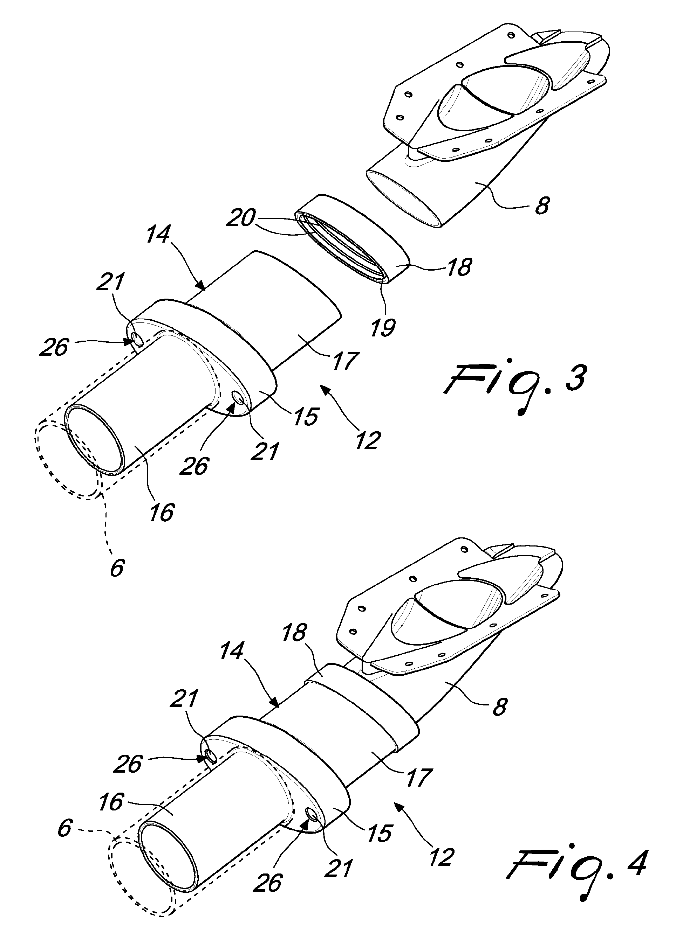

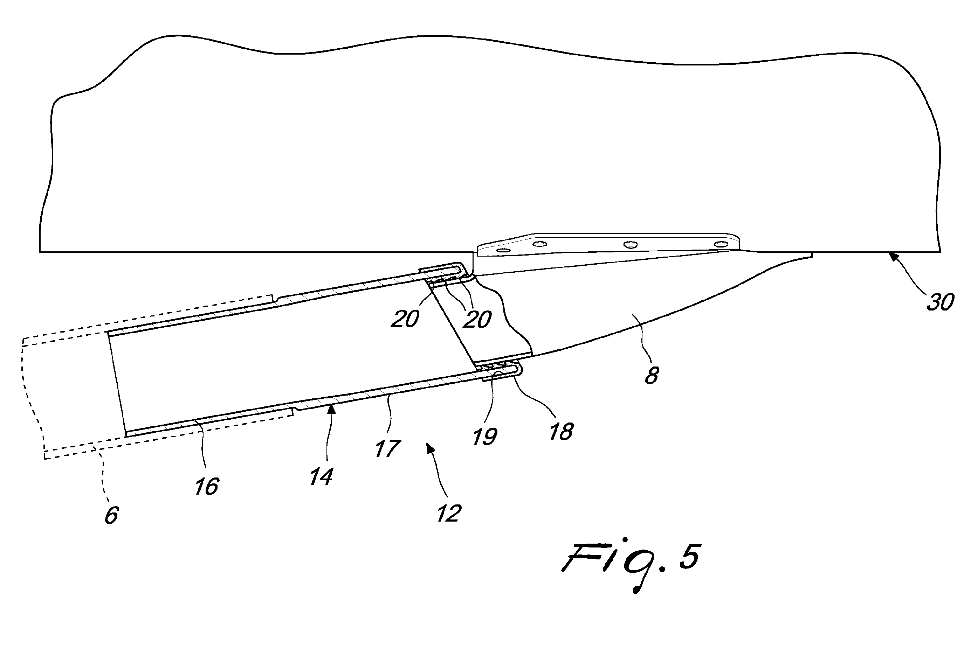

Figures 3, 4 and 5 show an adapter 12 for the air intake 8 of an aircraft. The adapter 12 comprises a body 14 that has, in an intermediate region of its extension, a flange 15 on one side of which a first cylindrical portion 16 extends that is circular in cross-section and which is designed to be fitted into an end portion of the connection conduit 6 to be associated with the outlet port 4 of the pneumatic pump 3. On the other side of the flange 15 a second cylindrical portion 17 extends that is elliptical in cross-section, or with another shape corresponding to the shape of the air intake 8, which engages with an annular joint 18, made of elastically deformable material, which is also shaped so as to correspond to the air intake 8 and can be fitted over the air intake 8. More specifically, the end of the second cylindrical portion 17 is inserted in an adapted seat 19 provided in the annular joint 18 and the annular joint 18 has, on its entire lateral surface, a plurality of toothing formations 20 for increasing the adhesion of the annular joint 18 to the outer surface of the air intake 8.

The flange 15 of the body 14 of the adapter 12 is provided with retention means 26 that are engageable with a part of the aircraft or with an element fixed to the ground so as to prevent the detachment of the adapter 12 from the air intake 8 during the insufflation of air into the air intake 8.

The retention means 26 can be constituted simply by a pair of eyelets 21 in which to engage tension members to be connected to the aircraft or to the element fixed to the ground.

Similarly, an adapter 13 is provided, not shown in detail, that is shaped so as to correspond to the exhaust port 9 and which is associated so as to be airtight with the opposite end of the connection conduit 7 from the end to be connected to the inlet port 5 of the pneumatic pump 3 in such a way as to achieve an adequate seal in the coupling between the connection conduit 7 and the exhaust port 9.

Conveniently, the frame 2 is mounted on castors 22 and is provided with a handle 23 so as to make moving the device particularly simple.

On the frame 2 an electrical switchboard 24 is mounted for commanding and controlling the device. Such electrical switchboard 24 is provided with interface elements, of known type, by means of which the user can actuate and follow the operation of the device, such as for example command buttons, a list of the functions that can be executed, displays of the process parameters, progress of the process underway etc.

The device is completed by a wire wrapper 25 for the electric power cable of the pneumatic pump 3.

Use of the device according to the invention is the following.

When it is desired to actuate the aerodynamic turbine so that it actuates the corresponding service circuit of an aircraft, we can proceed by connecting, using the corresponding adapter 12, the connection conduit 6 to the air intake 8, or by connecting, using the corresponding adapter 13, the connection conduit 7 to the exhaust port 9 provided on the aircraft, or by connecting both the connection conduit 6 to the air intake 8 and also connecting the connection conduit 7 to the exhaust port 9.

In the first case, the actuation of the turbine is obtained as a result of the air flow generated by the pneumatic pump 3 and driven into the air intake 8. In the second case, the actuation of the turbine is obtained as a result of the depression generated downstream of the turbine by the suction through the exhaust port 9. In the third case, the actuation of the turbine is obtained as a result of a combined effect of the two previous cases.

In practice, in the several conditions of use, the device generates an air flow that enters the air intake 8 and exits from the exhaust port 9 thus actuating the aerodynamic turbine in a manner similar to what happens during flight.

It should be noted that the device according to the invention implements the actuation of the service circuits of aircrafts by means of the actuation of the aerodynamic turbine without requiring the introduction of refrigerant fluid into the circuit and therefore without exposing the service circuit to the dangers of contamination.

In practice it has been found that the device according to the invention fully achieves the intended aim and objects in that it makes it possible to actuate on the ground, substantially with no time limit, aerodynamic turbines for actuating service circuits of aircrafts, particularly circuits for cooling electronic devices, without requiring interventions on the service circuit and thus safely preventing the danger of contamination of the service circuit.

In practice the materials employed, provided they are compatible with the specific use, and the dimensions, may be any according to requirements and to the state of the art.

The disclosures in Italian Utility Model Application No. MI2010U000247 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for actuation on the ground of aerodynamic turbines for actuating service circuits of aircraft, particularly circuits for cooling electronic devices, **characterized in that** it comprises:
- a supporting frame (2);
- a pneumatic pump (3) having an outlet port (4) and an inlet port (5);
- at least one connection conduit (6, 7) that can be associated with one end thereof with said outlet port (4) and with the other end thereof with an air intake (8), provided on the aircraft, of an aerodynamic turbine for actuating service circuits of aircrafts or which can be associated with one end thereof with said inlet port (5) and with the other end thereof with the exhaust port (9), provided on the aircraft, of an aerodynamic turbine for actuating service circuits of aircrafts in order to generate an air flow for actuating said aerodynamic turbine.

2. The device according to claim 1, **characterized in that** said at least one connection conduit comprises two connection conduits (6, 7), respectively:
- a first connection conduit (6) that can be associated with one end thereof with said outlet port (4) and with the other end thereof with the air intake (8), provided on the aircraft, of an aerodynamic turbine for actuating service circuits of aircrafts;
- a second connection conduit (7) that can be associated with one end thereof with said inlet port (5) and with the other end thereof with the exhaust port (9), provided on the aircraft, of an aerodynamic turbine for actuating service circuits of aircrafts in order to generate an air flow for actuating said aerodynamic turbine for actuating service circuits of aircrafts.

3. The device according to claims 1 and 2, **characterized in that** said pneumatic pump (3) is constituted by a blower/extractor with lateral channels.

4. The device according to one or more of the preceding claims, **characterized in that** said pneumatic pump (3) is provided with a filter (10, 11) on the outlet port (4) and/or on the inlet port (5).

5. The device according to one or more of the preceding claims, **characterized in that** the end of said connection conduit (6, 7) is provided with an adapter (12, 13) which can be coupled with the air intake (8) or with the exhaust port (9), both provided on the aircraft, of the aerodynamic turbine for actuating service circuits of aircrafts.

6. The device according to one or more of the preceding claims, **characterized in that** said adapter (12) comprises an annular joint (18) made of elastically deformable material which is shaped so as to correspond to the air intake (8), provided on the aircraft, of the aerodynamic turbine, said annular joint (18) being able to be coupled with one axial end thereof to said air intake (8) and being connected, with the other axial end thereof, to the body (14) of the adapter (12) that is able to be coupled with said connection conduit (6) and provided with retention means (26) which can engage with a part of the aircraft or with elements fixed to the ground.

7. The device according to one or more of the preceding claims, **characterized in that** said retention means (26) comprise a flange (15) of said body (14) of the adapter (12) which is perforated by a pair of eyelets (21).

8. The device according to one or more of the preceding claims, **characterized in that** said frame (2) is mounted on castors (22).

9. The device according to one or more of the preceding claims, **characterized in that** it comprises a switchboard (24) for commanding and controlling the device mounted on said frame (2).
